# EUROPEAN PATENT APPLICATION

(11) **EP 0 788 006 A2**
(43) Date of publication of application: **06.08.1997**
(21) Application number: 97300646.3
(22) Date of filing: 31.01.1997
(51) Int. Cl.: G02B 26/08

(54) **Improvements in or relating to spatial light modulators**

(30) Priority: 01.02.1996 US 10980
(71) Applicant: TEXAS INSTRUMENTS INCORPORATED, Dallas Texas 75265 (US)
(72) Inventor: Sampsell, Jeffrey B., Vancouver, Washington 98682 (US)
(74) Representative: Legg, Cyrus James Grahame

(57) **Abstract**

A light collection device (10) for collecting light from a source (13) and directing it to a rectangular surface, such as an array of pixel-generating elements of an SLM (15). A first array (10a) is comprised either of lenses or of holographic optical elements (HOE'S)(21), each of which directs light from the source to a different spot at an image plane. A second array (10b) of HOE's is placed near the image plane, and has an HOE (21) for each spot of light at the image plane. Each HOE of the second array (10b) directs the light from its corresponding spot of light to the surface to be illuminated, resulting in a number of superposed beams of light on that surface.

## Description

### TECHNICAL FIELD OF THE INVENTION

This invention relates to spatial light modulators, and more particularly to optical components for collecting light from a source and directing the light to a spatial light modulator.

### BACKGROUND OF THE INVENTION

Spatial light modulators (SLMs) are increasingly being used for providing images in both display systems and photoelectric printers. In general, SLMs are arrays of pixel-generating elements that emit or reflect light to an image plane, such as a screen of a display system or a drum of a printer. The SLM modulates light by turning the pixel-generating elements "ON" or "OFF".

Digital micro-mirror devices (DMDs) are one type of SLM. A DMD is an electromechanical device, whose pixel-generating elements form an array of thousands of tiny tilting mirrors. To permit the mirrors to tilt, each is attached to one or more hinges mounted on support posts, and spaced by means of an air gap over underlying control circuitry. The control circuitry provides electrostatic forces, which cause each mirror to selectively tilt. Incident light on the mirror array is reflected by the "ON" mirrors in one direction and by the "OFF" mirrors in the other direction. The pattern of "ON" versus "OFF" mirrors forms an image. In most applications, the light from the DMD is projected by a projection lens to the image plane.

An SLM may be reflective, such as the DMD, or transmissive. In either case, some sort of illumination system is required. Compactness and minimal heating are desirable characteristics for the illumination system. Typical sources of light include light-emitting diodes and arc lamps, which should be as small, cool, inexpensive, and efficient as possible.

In addition to the light source, the illumination system has optical devices, such as lenses and prisms, for collecting the light for delivery to the SLM. The light collection devices should be efficient in terms of collecting all available light from a given source. Also, the light they provide to the spatial light modulator should be uniform.

### SUMMARY OF THE INVENTION

The following invention is directed to an optical system for collecting light from a source, such as a lamp. This light collection system is especially designed for illuminating spatial light modulators (SLM's), which require homogeneous light and have a well-defined rectangular surface area to be illuminated.

In one embodiment of the invention, a first array of holographic optical elements (HOE's) intercepts a beam of light from a source. Each HOE of this first array is patterned to transmit a portion of the beam to a different point on an image plane between the first array and the SLM. Each HOE is further patterned so that the smaller beam it transmits has a beam shape that is the same as the surface area of the SLM to be illuminated. A second array of HOE's is placed beyond this image plane. This second array has one HOE for every beam provided by the first array. Each HOE of this second array transmits its beam to the surface of the SLM, thereby superimposing the light from each HOE of the first array onto the SLM.

An advantage of an optical device designed in accordance with the invention is that it converts a circular beam from a source to the rectangular shape of the surface area of an SLM. The device increases the uniformity and the amount of light collected from the source. The device is easily manufactured -- once a master array of HOE's is made, additional arrays can be made by embossing, which is an inexpensive and high-volume process.

### BRIEF DESCRIPTION OF THE DRAWINGS

The present invention will now be further described, by way of example, with reference to the accompanying drawings in which:
FIGURE 1 is a side view of a light collection system, used to collect light from a source to illuminate an SLM in accordance with the invention;
FIGURE 2 is a front view of the first HOE array of the light collection system of FIGURE 1;
FIGURE 3 illustrates the recording of an HOE for the first HOE array of FIGURE 1;
FIGURE 4 illustrates the recording of an HOE for the second HOE array of FIGURE 1; and
FIGURE 5 illustrates the light collection system of FIGURE 1, with a diffuser.

### DETAILED DESCRIPTION OF THE INVENTION

The following description is directed to a light collection system that collects light from a source to illuminate a spatial light modulator (SLM). The light collection system could also be used for illuminating other surfaces, and is especially useful for illuminating surfaces having a defined shape and requiring uniform illumination.

The SLM generates an image, which is projected by a projection lens to an image plane. For purposes of example, the SLM is a DMD, but other types of SLMs could be used. Regardless of the type of SLM, the device described herein is designed to receive maximum energy from a given light source and to provide well-defined and homogenous illumination for the SLM.

The light collection device described herein could be used in either an image display system or an SLM-based printing system. In an image display system, the SLM is addressed with data representing pixel intensities. The ON/OFF duration of each pixel element is controlled during each image frame in a form of pulse width modulation. Greyscale images are defined by which pixels are ON or OFF and for how long during each frame. In a printing system, modulated light from the SLM is used to determine whether pixels of the page being printed are "ON" or "OFF", with the duration of exposure time being one method of controlling greyscale.

Examples of SLM-based image display systems, without the light collection device of the present invention, are described in U.S. Patent No. 5,079,544, entitled "Standard Independent Digitized Video System", in U.S. Patent No. 5,526,051, entitled "Digital Television System", and in U.S. Patent No. 5,452,024, entitled "DMD Display System", each assigned to Texas Instruments Incorporated. An example of a DMD-based printing system is described in U.S. Patent No. 5,041,851, entitled "Spatial Light Modulator Printer and Method of Operation", assigned to Texas Instruments Incorporated and incorporated.

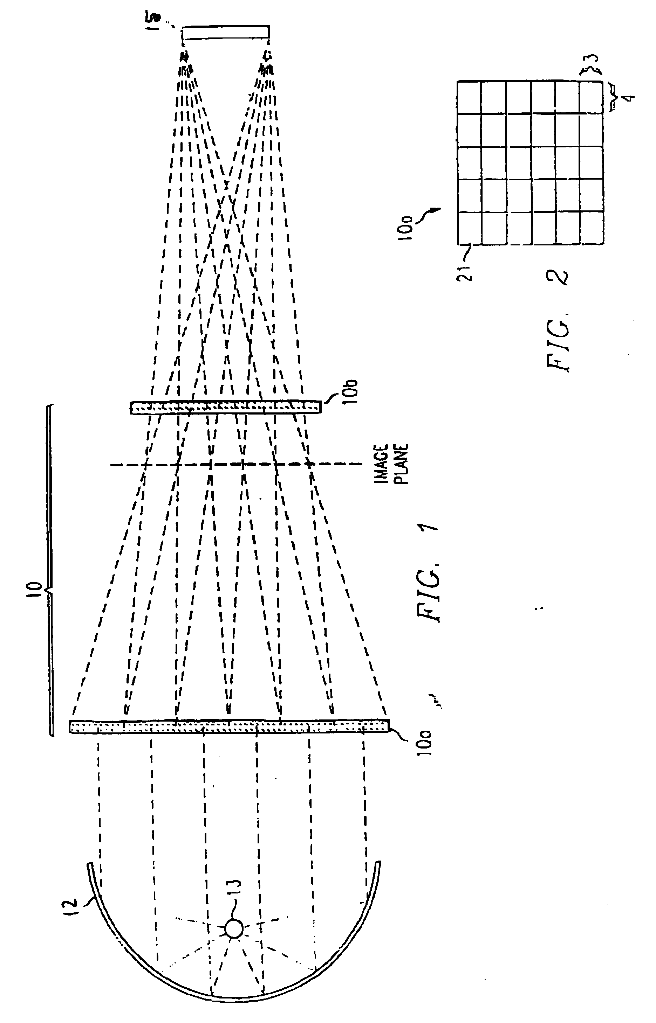

FIGURE 1 is a side view of light collection system 10, used to collect light from a source 13 and to direct the light to an SLM 15. An example of a suitable light source 13 is an arc lamp. A parabolic reflector 12 receives light from source 13 and reflects a substantially collimated beam toward light collection system 10.

Light collection system 10 is comprised of two arrays 10a and 10b, which are arrays either of lenses or of holographic optical elements (HOE's) recorded to perform the function of lenses. Each array 10a and 10b is two-dimensional, comprised of rows and columns of lenses or HOE's.

For purposes of this description, both array 10a and 10b are described herein as being comprised of HOE's. Although each HOE could be replaced by a lens, a feature of the invention is that making array 10b with HOE's is much simpler than making array 10b with lenses having the required functionality.

FIGURE 2 is a front view of HOE array 10a, which is placed so as to intercept the beam of light from source 13. Each HOE 21 provides a rectangular beam, having an aspect ratio corresponding to that of SLM 15. For example, if SLM 15 provides a 4:3 image, each HOE provides a beam whose cross-sectional width-to-height ratio is 4:3. If the surface to be illuminated has some shape other than rectangular, the HOE's 21 can be designed to provide a beam having that shape. Also, if array 10a were made from lenses, the lenses would be shaped to provide the desired beam shape.

Typically, the arrangement of HOE's 21 in array 10a is regular, in that the HOE's 21 are uniformly spaced along each row and column. As an alternative to the grid type spacing of FIGURE 2, the rows or columns may be staggered.

Referring to both Figures 1 and 2, each HOE 21 of array 10a receives some portion of the beam of light from source 13. Each HOE 21 directs its light to a different point at an image plane, as indicated on FIGURE 1. The result is a two-dimensional array of "light spots" at the image plane.

Generally, as indicated in FIGURE 1, the area to be illuminated, here SLM 15, is smaller than the output aperture of source 13. Thus, the elements (HOEs or lenses) of array 10a are typically larger in area than the elements of array 10b, so as to contribute to a smooth reduction of the beam size within system 10. However, in other applications, system 10 could maintain the beam size or could increase it.

FIGURE 3 illustrates how each HOE 21 of array 10a is recorded on a piece of holographic recording material 31 as the interference of a plane wave and a converging spherical wave. When the developed HOE 21 is illuminated with the light from source 13, it produces a converging spherical wave, just as a positive lens would. Additional HOE's can be made from each developed HOE 21 by embossing the same pattern onto an appropriate material.

If lenses are substituted for HOE's 21 of array 10a, array 10a would then be a conventional "fly's eye" array of lenses or a modified such array with converging optical axes. Each lens would have a rectangular area with the desired aspect ratio, and would have a curved surface appropriate for the desired focal length.

Referring again to FIGURE 1, array 10b is an array of HOE's, each for receiving light from one of the spots of light provided by array 10a. Thus, there is at least one HOE in array 10b for every HOE of array 10a.

As compared to the arrangement of HOE's (or lenses) of array 10a, the arrangement of HOE's in array 10b is generally irregular. Each HOE of array 10b is patterned so that it captures the light from its associated HOE (or lens) in array 10a and illuminates the face of SLM 15 with that light. In other words, each HOE of array 10b directs the beam of light from its associated HOE (or lens) of array 10a onto SLM 15. As is characteristic of HOE's, the optical function of each HOE of array 10b not dictated by its physical shape as would be the case if lenses were used.

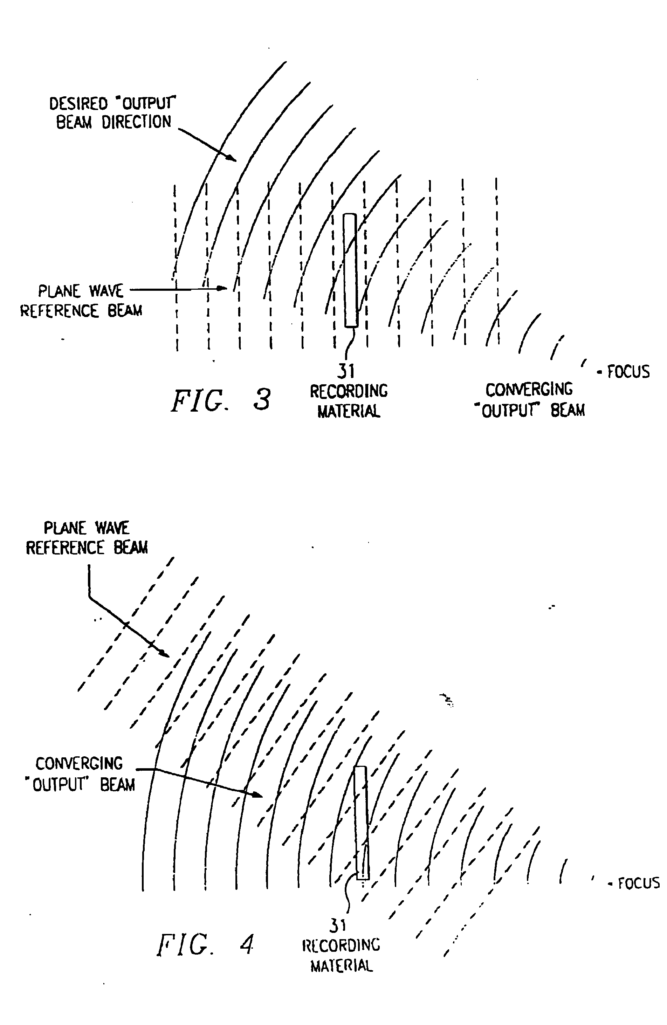

FIGURE 4 illustrates how each HOE of array 10b is recorded as the interference of a plane wave and a converging spherical wave. The direction of travel of the plane wave corresponds to the direction of travel of the spherical wave that would arrive at this HOE from the corresponding HOE of array 10a. The convergence of the spherical "output" waves used to create the HOE's of array 10b take into account the nature of the input beams that the HOEs will see in operation. These convergences are adjusted so that when the inputs to array 10b are the beams diverging to the right of the image plane shown in FIGURE 1, as opposed to the plane waves of FIGURE 4, the HOE's of array 10b modify these diverging beams so that each beam just fills the surface area of SLM 15.

For purposes of this description, as shown in FIGURE 1, array 10b is placed beyond the image plane. Alternatively, array 10b could be placed in front of the image plane. In this case, array 10a would direct light toward an image plane, but each beam of light that would otherwise go to the image plane is captured by an HOE of array 10b. Because of the placement of array 10b in front of the image plane, the beams are still converging when they reach array 10b, and appropriate modifications to the fabrication of array 10b would be required.

Regardless of whether array 10b is in front of or beyond the image plane, each HOE of array 10b is patterned to redirect light from a "light beam" provided by an associated element (HOE or lens) of array 10a. Each HOE of array 10b redirects this light such that all the beams, one from each HOE, are superimposed onto SLM 15.

The use of HOE's in array 10b avoids the need for manufacturing array 10b with lenses, each of which would require a unique configuration so as to properly direct light to SLM 15. As with the HOE's for array 10a, array 10b can be manufactured by developing a master for each HOE of array 10b and then embossing HOE's with the same pattern to make additional arrays 10b.

As a result of the redirecting by array 10b of the light from each light spot formed by array 10a, there are as many superimposed beams of light on SLM 15 as there are HOE's (or lenses) in array 10a. Each beam of light contains a portion of the energy of the original beam and has the rectangular shape of the SLM 15. Because of the superposition, the total illumination is substantially uniform.

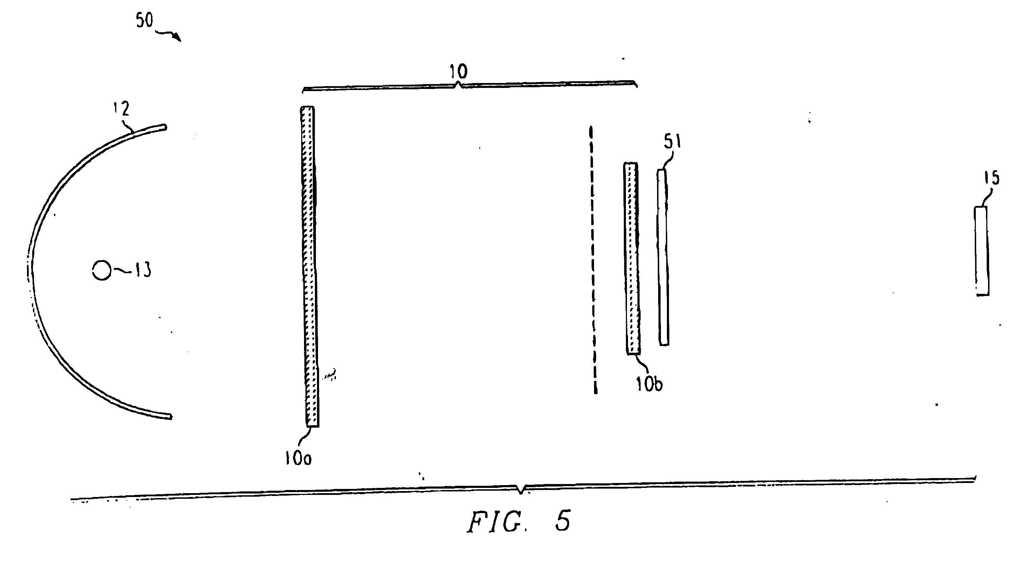

FIGURE 5 illustrates a modified light collection system 50, having a diffuser 51. Diffuser 51 is placed behind array 10b and diffuses the light from each HOE before it reaches SLM 15. Such diffusers can be bulk or surface scattering films or bulk or surface holographic elements. In all cases, the use of diffuser 51 results in a trade-off of decreased intensity of illumination onto SLM 15 for increased uniformity.

Although the invention has been described with reference to specific embodiments, this description is not meant to be construed in a limiting sense. Various modifications of the disclosed embodiments, as well as alternative embodiments, will be apparent to persons skilled in the art.

## Claims

1. An optical system for collecting light from a source for use in illuminating a surface, comprising:
an array of first optical elements arranged for intercepting said light, each of said first optical elements being shaped to direct a portion of said light to a different point at an image plane between said array of first optical element and said surface, thereby providing an array of light spots; and
an array of second optical elements placed near said image plane, each of said second optical elements associated with a corresponding first optical element, each of said second optical elements being shaped to transmit light from one of said light spots onto said surface, such that all beams of light from said light spots are superimposed on said surface.

2. The system of Claim 1, wherein said surface has a defined outline and wherein each said first optical element is shaped to provide a beam of light with a beam shape corresponding to said outline.

3. The system of Claim 1 or Claim 2, wherein said surface is rectangular and each said first optical element is shaped to provide a beam of light with a beam shape having substantially the same aspect ratio as said surface.

4. The system of any preceding claim, wherein each of said second optical elements is patterned to transmit a beam of light to said surface with substantially the same outline as said surface.

5. The system of any preceding claim, further comprising a diffuser placed behind said array of second optical elements.

6. The system of any preceding claim, wherein said array of second optical elements is placed beyond said image plane.

7. The system of any of Claims 1 to 5, wherein said array of second optical elements is placed in front of said image plane.

8. The system of any preceding claim, wherein said array of first optical elements comprises an array of lenses.

9. The system as claimed in any of Claims 1 to 8, wherein said array of first optical elements comprises an array of holographic optical elements (HOE's).

10. The system as claimed in any preceding claim, wherein said array of second optical elements comprises an array of holographic optical elements (HOE's).

11. A method of illuminating a surface with light from a source, comprising the steps of:
placing an array of first optical elements between said source and said surface, each of said first optical elements being shaped to direct a portion of said light to a different point on an image plane, thereby providing an array of light spots; and
placing an array of second optical elements near said image plane, each of said second optical elements being associated with a corresponding first optical element, each of said second optical elements being shaped to transmit light from one of said light spots onto said surface, such that all beams of light from all said light spots are superimposed.

12. The method of Claim 11, further comprising providing an array of first optical elements each of which is shaped to provide a beam having a shape corresponding to a defined outline of said surface of said surface.

13. The method of Claim 11 or Claim 12, further comprising providing an array of first optical elements each of which is shaped to provide a rectangular beam with substantially the same aspect ratio as a rectangular surface.

14. The method of any of Claims 11 to 13, further comprising providing an array in which each of said first optical elements is a lens.

15. The method of any of Claims 11 to 13, further comprising providing an array in which each of said first optical elements is a holographic optical element (HOE).

16. The method of any of Claims 11 to 15, further comprising providing an array in which each of said second optical elements is a holographic optical element (HOE).
